(19) Europäisches Patentamt

European Patent Office

Office européen des brevets

(11) Veröffentlichungsnummer : **0 457 059 B1**

(12) **EUROPÄISCHE PATENTSCHRIFT**

(45) Veröffentlichungstag der Patentschrift :
**16.03.94 Patentblatt 94/11**

(51) Int. Cl.$^5$ : **B01D 53/36, C01B 21/38**

(21) Anmeldenummer : **91106429.3**

(22) Anmeldetag : **22.04.91**

(54) **Verfahren zur Entstickung von Abgasen unter Gewinnung von HNO3.**

(30) Priorität : **12.05.90 DE 4015284**

(43) Veröffentlichungstag der Anmeldung :
**21.11.91 Patentblatt 91/47**

(45) Bekanntmachung des Hinweises auf die
Patenterteilung :
**16.03.94 Patentblatt 94/11**

(84) Benannte Vertragsstaaten :
**AT BE CH DE DK ES FR GB GR IT LI LU NL SE**

(56) Entgegenhaltungen :
**EP-A- 0 008 488**
**DE-A- 2 818 473**
**DE-A- 3 642 468**
**DE-B- 2 537 061**

(73) Patentinhaber : **Degussa Aktiengesellschaft**
**Weissfrauenstrasse 9**
**D-60311 Frankfurt (DE)**

(72) Erfinder : **Wedel, Wedigo v., Dr.**
**Mathildenstrasse 39**
**W-6050 Offenbach (DE)**
Erfinder : **Senff, Elke**
**Rote Hohl 2**
**W-6456 Langenselbold (DE)**
Erfinder : **Helmling, Oswald, Dr.**
**Wiesenstrasse 15a**
**W-6467 Hasselroth 2 (DE)**

EP 0 457 059 B1

## Beschreibung

Die Erfindung betrifft ein Verfahren zur Entfernung von Stickoxiden, insbesondere von NO und/oder $NO_2$ aus Abgasen, insbesondere solchen aus Industrie- und Feuerungsanlagen, unter Gewinnung von Salpetersäure.

Aus Gründen des Umweltschutzes kommen wirksamen Verfahren zur weitgehenden Entfernung von Stickoxiden aus industriellen Anlagen, z. B. der Düngemittelherstellung oder der Metallverarbeitung aber auch aus Feuerungsanlagen der verschiedensten Art, darunter Kraftwerken und Müllverbrennungsanlagen, steigende Bedeutung zu. Der Wert dieser Verfahren ist danach zu beurteilen, in welchem Umfang die Schadstoffe entfernt werden können, ob dabei harmlose Konversionsprodukte entstehen oder verwertbare Folgeprodukte, also Wertstoffe gebildet werden.

Es wurden bereits Verfahren beschrieben, mit denen stickoxidhaltige Abgase unterschiedlichster Herkunft einer Gaswäsche zur physikalischen oder chemischen Absorption der Stickoxide unterzogen wurden. Da in solchen Abgasen meist Stickstoffdioxid $NO_2$ und Stickstoffmonoxid NO enthalten sind und letzteres in wäßrigen Medien besonders schwer absorbierbar ist, ist vorgeschlagen worden, das NO vor der Gaswäsche katalytisch zu oxidieren - DE-B-25 37 061.

Zwar läßt sich das gebildete Stickstoffdioxid aus dem Abgas grundsätzlich durch Absorption in Wasser entfernen, doch gelingt eine ausreichende Verminderung seiner Konzentration bei niedrig beladenen Abgasen (z. B. < 2000 ppm $NO_2$) bei den in der Praxis der großtechnischen Abgasreinigung üblichen Apparaturen wegen der wirtschaftlich bedingten Beschränkung der Verweilzeiten (z.B. auf Werte unter ca. 2 sec.) infolge der noch zu geringen Lösungsgeschwindigkeit nur unbefriedigend.

Auch eine Umsetzung von gelöstem Stickstoffdioxid durch eine chemische Reaktion mit Oxidationsmitteln, Alkalimetallhydroxid oder Ammoniak, welche dem Absorptionsmittel in der Absicht zugesetzt werden, eine Beschleunigung der Absorption durch spontane Entfernung gelösten Stickstoffdioxids aus dem Lösungsgleichgewicht zu erzielen, haben nicht zum gewünschten Erfolg geführt: Trotz Zugabe von $NaClO_2$ als Oxidationsmittel waren unter technischen Bedingungen, d. h. bei $NO_x$-Anteilen von $Y_{NO_x} \leqq 1000$ ppm Verweilzeiten im Abluftwäscher von < 1 sec. und Temperaturen > 40° C, kaum höhere Absorptionsgrade als 50 % zu erreichen. Erschwerend kommt hinzu, daß zumindest bei Feuerungsabgasen alkalische Waschlösungen wegen des Alkali-Verbrauches durch $CO_2$ nicht wirtschaftlich verwendet werden können. Auch durch Zugabe von Lösungsvermittlern (Metallchelatkomplexe) konnte die oxidative Gaswäsche nicht wesentlich verbessert werden.

Das derzeit dominierende Verfahren zur Entstickung von Abgasen besteht in der Reduktion der Stickoxide zu Stickstoff und Wasser. Dies kann entweder katalytisch (SCR) oder nichtkatalytisch durch Anwendung hoher Temperaturen (SNCR) erfolgen. Als Reduktionsmittel dient bei beiden Verfahren meist Ammoniak. SCR-bzw. SNCR-Anlagen zur Abgasentstickung zeigen als Nachteil einen mehr oder weniger großen Ammoniakschlupf.

Neben dem Ammoniakschlupf liegen weitere Nachteile vor. Es besteht die Notwendigkeit, flüssiges Ammoniak in größeren Mengen vorzuhalten, was mit einer potentiellen Gefährdung der Bevölkerung verbunden ist. Das SCR-Verfahren benötigt relativ kostspielige Katalysatoren. Da beide Verfahren bei erhöhter Temperatur durchgeführt werden, müssen kühler anfallende Abgase vorgeheizt werden. Als Reaktionsprodukte entstehen die harmlosen Verbindungen Stickstoff und Wasser; diese stellen keine weiterverwendbaren Wertstoffe dar.

Es ist auch schon versucht worden, stickoxidhaltige Abgase mit wäßriger Wasserstoffperoxidlösung in einem Waschverfahren zu behandeln. Auch dieser Weg hat bisher zu keinem greifbaren Erfolg geführt, da die bei wenig Stickoxide enthaltenden und größere Waschzeiten benötigenden Abgasen erreichbaren Entstickungsgrade nicht annähernd genügten.

Die DE-A-3642468 beschreibt die Oxidation von $NO_x$ mit $H_2O_2$.

Der Erfindung liegt die Aufgabe zugrunde, ein Verfahren zur Reinigung stickoxidhaltiger Abgase, insbesondere solcher mit niedrigen $NO_x$-Konzentrationen, d. h. Konzentrationen <1000 ppm $NO_x$, zu schaffen, welches schon bei niedrigen Temperaturen und bei drastisch verminderten Verweilzeiten Entstickungsgrade oberhalb 90 % erlaubt, wobei die Stickoxide praktisch vollständig in einen Wertstoff, nämlich in Salpetersäure überführbar sind.

Gegenstand der Erfindung ist ein Verfahren zur Entfernung von Stickoxiden, insbesondere von NO und-/oder $NO_2$ aus Abgasen, insbesondere solchen aus Industrie- und Feuerungsanlagen, unter Gewinnung von Salpetersäure, welches dadurch gekennzeichnet ist, daß man den Gehalt des Abgases an den Stickoxiden ermittelt, das Abgas mit einer in den gasförmigen Zustand übergeführten Wasserstoffperoxidlösung in einer auf die zu entfernende Stoffmenge der Stickoxide bemessenen, stöchiometrisch den Reaktionsgleichungen

$$2\ NO + 3\ H_2O_2 \rightarrow 2\ HNO_3 + 2\ H_2O$$

bzw.

$$2\ NO_2 + H_2O_2 \rightarrow 2\ HNO_3$$

2

genügenden Menge, gegebenenfalls mit einem Überschuß, belädt, das Gasgemisch entweder bei seiner Temperatur oder vorzugsweise unter Einstellung einer Temperatur von 20 - 120° C, an einem aufgrund erhöhter äußerer Oberfläche und/oder aufgrund vorhandener innerer Oberfläche, zumindest gegenüber $H_2O_2$ adsorptionsfähigen, dieses aber nicht oder nicht übermäßig zersetzenden Feststoff als Katalysator umsetzt, das umgesetzte Gasgemisch zur Weiterverarbeitung ableitet oder den in ihm enthaltenen Anteil an gebildetem gasförmigen $HNO_3/H_2O$-Gemisch nach an sich bekannten Maßnahmen, wie Kondensation oder Waschen mit Wasser, zu Salpetersäure weiterverarbeitet.

Die Versuchsergebnisse zeigen, daß ein Teil des im Gasstrom vorliegenden NO durch eine Nebenreaktion in $NO_2$ überführt wird nach $NO + H_2O_2 \rightarrow NO_2 + H_2O$. Demzufolge kann als Reaktionsprodukt aus der Umsetzung nicht nur $HNO_3$, sondern, sofern NO vorhanden ist, auch $NO_2$ hervorgehen. Durch Vorhalten eines ausreichenden Angebots von $H_2O_2$ wird letzteres jedoch weiter zu $HNO_3$ oxidiert.

Die Umsetzung kann in einem Wirbelbett oder Festbett des Katalysators durchgeführt werden, wobei das Wirbelbett bevorzugt wird.

Der Einsatz des Katalysators im Wirbelbett erlaubt eine geringere Korngröße und einen verbesserten Stoff- und Wärmeübergang zwischen der Gasphase und dem Katalysator. Bei der gegebenen schnellen chemischen Umsetzung ist eine geringe Korngröße vorteilhaft, da eine bessere Katalysatorausnutzung wegen kürzerer Diffusionswege und wegen der vergrößerten äußeren Oberfläche vorliegt. In der Wirbelschicht wird zudem die Reaktionswärme besser als im Festbett abgeführt.

Der Einsatz eines Festbettreaktors empfiehlt sich bei Verwendung eines weniger abrasionsresistenten Katalysators, sowie in Fällen, in denen nur eine Teilentstickung bei geringem Druckverlust gefordert ist.

Experimentell konnte bisher (bei 750 ppm $NO_x$) im Festbettreaktor bei einer Raumgeschwindigkeit von 66,7 $m^3/h/kg$ ein Entstickungsgrad von über 70 % bei Temperaturen zwischen 40° C und 100° C realisiert werden.

Die Auswahl des Katalysators ist an sich nicht kritisch, weil sich jegliche feinverteilte und/oder poröse und/oder rauhwandige Feststoffe als geeignet erwiesen haben, sofern sie Wasserstoffperoxid nicht oder nicht übermäßig zersetzen und natürlich gegenüber Reaktanden und Reaktionsprodukt chemisch beständig sind.

Die nachgewiesene Eignung einer Vielzahl von für Katalysatorträger oder Adsorbentien üblichen Stoffen zeigt, daß der Katalysator praktisch nur durch seine gegenüber den Wandungen üblicher Reaktionsgefäße erhöhten Oberfläche wirkt.

Im Experiment geeignet befunden wurden die im folgenden mit a), b) und c) bezeichneten Stoffgruppen, wobei die Wirksamkeit von a) nach c) abnimmt. Stoffe, die sich als vollkommen ungeeignet erwiesen, waren sog. Reflexperlen aus Glas (Fa. Belletini) oder völlig porenfreie Ionenaustauscherharze (z. B. Lewatit S 100, Best.-Nr. 2-100, Fa. Bayer) oder Mangan(IV)-Oxid in Pulverform, welches bekanntlich Wasserstoffperoxid besonders schnell zersetzt. Die untersuchten und als geeignet befundenen Stoffe sind sämtlich zu niedrigen Kosten verfügbar:

a) Kieselgele, Fällungskieselsäuren, pyrogene Kieselsäuren, gegebenenfalls jeweils in hydrophobierter Form;
- weit- oder mittelporige natürliche oder synthetische Zeolithe;
- Ionenaustauscherharze mit poröser Struktur;
- Phyllosilikate;
- Diatomeenerde;
- Aluminiumoxid
- Titandioxid;
- natürliche oder synthetische Schichtsilikate;
- Aktivkohlen;
aber auch
b) Mikroglaskugeln;
- Quarzsand;
- Calciumsulfathydratpulver;
- engporige Zeolithe
und sogar
c) Bausand;
- Eisenoxid.

Die experimentell näher überprüften Katalysatoren werden nachfolgend näher gekennzeichnet:
Kieselgel 60, Korngröße 0,2 - 0,5 mm, spez. Oberfläche ca. 450 - 500 $m^2/g$ (Artikel 7733 der Fa. Merck, Darmstadt);
Kieselgel 60 H, silanisiert (Artikel 7761 der Fa. Merck, Darmstadt);
Weitporiger 12-Ring Zeolith, Mordenit (Porenweite 6,7 x 7,0 Å, Modul 18 (Si/Al = 9));
Weitporiger 12-Ring Zeolith, dealuminierter y-Zeolith (Porenweite 7,4 Å, Modul 200 (Si/Al = 100));

Weitporiger 12-Ring Zeolith, $NH_4$-y-Zeolith (Porenweite 7,4 Å, Modul 5 (Si/Al 2,5)) sowie mittelporiger 10-Ring Zeolith, ZSM-5 (Porenweite 5,4 - 5,6 Å, Modul 42 (Si/Al 21));

Ionenaustauscherharz, makroporös, stark sauer (Amberlyst 15, Art. 15635 der Fa. Merck, Darmstadt);

Diatomeenerde, geglüht - Handelsprodukt;

Aluminiumoxid 90 (Artikel 1078 der Fa. Merck, Darmstadt);

Titandioxid (Artikel 812 der Fa. Merck, Darmstadt);

Calciumsilikathydrat, enthalten in CATSAN - Hygienestreu der Fa. Effem, Verden/Aller;

Aktivkohle mit einer spezifischen Oberfläche von 1270 m²/g und einer mittleren Porenweite von 160 μm (Aktivkohleträger 120, Fa. Degussa, Frankfurt);

All diese Stoffe sind hervorragende Katalysatoren.

Mit mittlerer Wirkung einsetzbar sind:

Glaskugeln (Fensterglas, Korngröße 1 - 40 μm) (Micro-Glaskugeln Typ: 3000 der Fa. Potters-Ballotini GmbH, Kirchheimbolanden);

Quarzsand 0,4 - 0,6 mm Körnung (Typ P, Fa. Busch, Schnaittenbach);

Gefälltes pulverförmiges Calciumsulfat (Artikel 2160, Fa. Merck, Darmstadt);

Engporiger Zeolith (Na-A, Porendurchmesser 4 Å, Modul 2 (Si/Al = 1));

Engporiger Zeolith (K-A, Porendurchmesser 3 Å, Modul 2 (Si/Al = 1));

Mit schwacher Wirkung einsetzbar sind:

Bausand, Körnung 0,05 -0.6 mm;

Eisen(III)-oxidpulver;

Nach einer bevorzugten Ausführungsform des erfindungsgemäßen Verfahrens bringt man wäßriges Wasserstoffperoxid in einer Konzentration bis 85 Gew.-% in der erforderlichen Mengenbemessung zur Verdunstung in einen Abgasstrom, gegebenenfalls durch Versprühen oder Zerstäuben, ein oder nimmt die Verdunstung mittels eines extern oder eines im Abgasstrom angeordneten Verdampfers, vorzugsweise eines Fallfilmverdampfers, unter Einstellen der Verdunstungsmengen über die Menge der dem Verdampfer zugeführten $H_2O_2$-Lösung vor.

Zum Versprühen kann eine Ein- oder Zweistoffdüse dienen, durch die Wasserstoffperoxidlösung direkt in den zu behandelnden $NO_x$-haltigen Gasstrom gegeben wird und dort in die Gasphase übergeht. Eine Zerstäubung erfolgt vorzugsweise mit einem geeigneten handelsüblichen Ultraschallzerstäuber.

Wird die Wasserstoffperoxidlösung mit einem Fallfilmverdampfer vergast, so kann der Verdampfer entweder vom zu behandelnden Gasstrom als Aufnehmerphase der verdampfenden Wasserstoffperoxidlösung, oder von einem Hilfsgasstrom als Aufnehmerphase durchströmt werden. Letzterer wird dann nach Beladung mit Wasserstoffperoxidlösung mit dem zu behandelnden Gasstrom gemischt und dem Katalysatorteil zugeführt.

Wasserstoffperoxidlösung in bekanntem Mengenstrom wird mit einer Dosierpumpe kontinuierlich aus einem dünnen Schlauch oder Rohr auf den oberen Teil der beheizten Stoffaustauschfläche des Verdampfers gegeben. Sie fließt aufgrund der Schwerkraft nach unten, wobei eine kontinuierliche und vollständige Verdampfung stattfindet.

Eine besonders einfache Ausführungsform für einen extern angeordneten und von einem Hilfsgasstrom durchströmten Fallfilmverdampfer besteht in einer Füllkörperkolonne, auf deren oberes Ende die Wasserstoffperoxidlösung aus einem Vorratsbehälter gegeben wird und die von unten unter Zuhilfenahme eines Heißluftgebläses mit warmer Trägerluft durchströmt wird. Die Verdampfung kann weiterhin vorgenommen werden, indem die Wasserstoffperoxidlösung auf eine vom zu behandelnden Gas umströmte und durch dessen Wärmeinhalt zur vollständigen Verdampfung ausreichend erwärmte Verdampfungsfläche dosiert wird. Dies wird beispielsweise durch eine Packung von Glaskugeln im Gasstrom, die mit der $H_2O_2$-Lösung beträufelt oder besprüht wird, realisiert.

Zur Steigerung der Gesamteffektivität des erfindungsgemäßen Verfahrens hinsichtlich der Stickoxidentfernung kann man das am Katalysator umgesetzte Gasgemisch, gegebenenfalls nach sorptiver Verminderung oder Entfernung des darin enthaltenen $HNO_3$ zu weiterer Verminderung noch enthaltener Stickoxide erneut, gegebenenfalls nach erneuter Beladung mit $H_2O_2$ nach Anspruch 1, katalytisch umsetzen.

Diese Maßnahme kann nach Bedarf ein- oder mehrmals wiederholt werden. Auf eine Neubeladung mit $H_2O_2$ nach einer ersten Entstickungsstufe kann dann verzichtet werden, wenn das Abgas aus dieser Stufe noch nicht ausgenutztes $H_2O_2$ in ausreichender Menge enthält. Die sorptive Entfernung des nach einer vorausgegangenen katalytischen Umsetzung mit $H_2O_2$ gebildeten Hydrogennitrats $HNO_3$ kann durch eine Absorption, beispielsweise in Wasser oder in verdünnter Salpetersäure erfolgen.

Man verwendet hierzu eine Waschkolonne. Sie kann aber auch durch eine physikalische Adsorption, beispielsweise an Aktivkohle oder einem anderen geeigneten Adsorptionsmittel, erfolgen. Eine weitere Möglichkeit besteht in einer chemischen Umsetzung mit einem reaktiven Feststoff, wie z.B. Kalk.

Durch die ein- oder mehrfach wiederholte katalytische Behandlung des Gases in Anwesenheit von gasförmigem Wasserstoffperoxid wird eine fortgesetzte Verminderung der $NO_x$-Konzentration erreicht. Da jedoch auch bei relativ verdünnten $NO_x$-haltigen Gasen (< 1000 ppm $NO_x$) schon mit einer einmaligen Behandlung der beschriebenen Art Entstickungsgrade von über 90 % erzielt werden können, ist hier die mehrstufige Behandlung meist nicht erforderlich. Ganz anders verhält sich dies bei konzentrierteren $NO_x$-haltigen Gasen. Hier ist oft eine mehrstufige Behandlung notwendig, da durch die aufgrund des Taupunktes begrenzte Beladbarkeit der Gasphase mit $H_2O_2$ nur eine äquivalente Menge der Stickoxide zu $HNO_3$ umgesetzt werden kann.

Die Gasphase muß demnach erneut mit $H_2O_2$ beladen und erneut mit einer der vorgeschlagenen Katalysatoren in Kontakt gebracht werden, um den gewünschten Entstickungsgrad zu erreichen. Gegebenenfalls wird das aus der vorangehenden Umsetzung stammende $HNO_3$ vor der Neubeladung des Gases mit $H_2O_2$ ganz oder teilweise aus der Gasphase entfernt.

Auch die bei der Umsetzung auftretende Reaktionswärme kann die stufenweise Reaktionsführung erfordern, da andernfalls Schwierigkeiten mit dem Behältermaterial auftreten können. Die stufenweise Reaktionsführung kann jeweils in Festbett- oder Wirbelbettreaktoren, die einen oder mehrere der z. B. vorzugsweise beanspruchten Katalysatoren, gegebenenfalls mit Hilfsstoffen, z. B. zur Verbesserung der Fließfähigkeit oder zur Pelletisierung, enthalten, vorgenommen werden.

Wenn man als Wertstoff flüssige Salpetersäure gewinnen will, reichert man das im Verfahren gebildete gasförmige $HNO_3/H_2O$-Gemisch durch Waschen mit Wasser oder vorzugsweiser verdünnter Salpetersäure einer Konzentration über 10 Gew.-% in der Gasphase ab und leitet das im Waschvorgang nicht absorbierte Restgas, gegebenenfalls zu weiterer Behandlung, ab.

Bei der Gewinnung von flüssiger Salpetersäure ist aus Gründen der besseren Vermarktung bzw. der kostengünstigeren nachträglichen Aufkonzentrierung und/oder Reinigung eine möglichst hohe Konzentration der primär anfallenden Säure anzustreben. Die hier nach Anspruch 7 zu rezyklierende Salpetersäure fungiert als Aufnehmerphase für gasförmig vorliegendes $HNO_3$ und $H_2O$.

Die maximal erzielbare Konzentration der Salpetersäure ist diejenige, die sich durch das Verdampfungsgleichgewicht flüssige Salpetersäure/Gasphase einstellt. Hierbei ist der Wassergehalt und der $HNO_3$-Gehalt des Gases hinter dem Reaktor, sowie die Temperatur, bei der die Waschstufe betrieben wird, von großer Bedeutung.

Da die Werte dieser Parameter von Fall zu Fall stark unterschiedlich sein können, läßt sich keine allgemeingültige Aussage über die erzielbare Maximalkonzentration der im Wäscher zirkulierenden Salpetersäure angeben. Im Einzelfall ist diese bei Kenntnis der relevanten Werte nach üblichen Methoden berechenbar.

Um eine Aufkonzentrierung der Salpetersäure zu erreichen, kann man die Waschflüssigkeit rezyklieren, wobei man die aufkonzentrierte Salpetersäure bei Bedarf abzieht.

Um ein möglichst sauberes Abgas aus dem Verfahren zu erhalten, kann man nach einer vorzugsweisen Ausführungsform des erfindungsgemäßen Verfahrens das nach dem Auswaschen des $HNO_3$ abgeleitete Restgas vor einer Abgabe in die Atmosphäre in einer Waschstufe mit Wasser oder verdünnter Salpetersäure einer Konzentration bis 10 Gew.-% behandeln.

Die Verwendung von Salpetersäure höchstmöglicher Konzentration als Aufnehmerphase für gasförmig anfallendes $HNO_3/H_2O$-Gemisch hat zur Folge, daß das aus dem Absorptionsapparat abgeleitete Gas noch $HNO_3$ in einer Konzentration enthält, die sich aus dem Gas/Flüssig-Gleichgewicht ergibt.

Dazu kann es zur Einhaltung behördlicher Auflagen erforderlich werden, eine zweite Waschstufe nachzuschalten, welche die $HNO_3$-Emission verringert.

Diese zweite Waschstufe wird mit Wasser bzw. Salpetersäure einer Konzentration bis zu 10 Gew.-% betrieben. Um es nicht zu einer Aufkonzentrierung von $HNO_3$ in dieser Stufe kommen zu lassen, muß bei Bedarf Frischwasser eingespeist und ein Teil der Kreislauflösung ausgeschleust werden. Diese ausgeschleuste, mit $HNO_3$ schwach beladene Kreislauflösung aus der nachgeschalteten Wäsche wird dem Sumpf der vorangehenden Wäsche als Waschmittel zugeführt. So wird vermieden, daß nitratbelastetes Abwasser aus der nachgeschalteten Wäsche anfällt.

Die Effektivität des Verfahrens kann im allgemeinen folgendermaßen überprüft werden:

Ein mit Stickoxiden beladener Modellgasstrom passiert einen Fallfilmverdampfer, in welchem kontinuierlich zugeführte 50 Gew.-%ige wäßrige Wasserstoffperoxidlösung im Gleichstrom mit dem Modellgasstrom vollständig verdunstet wird. Die maximale $H_2O_2$-Konzentration im Modellgasstrom wird durch den Taupunkt des vergasten Wasserstoffperoxid/Wasser-Gemisches bei der Temperatur des Gasstroms begrenzt. So wurden bei einer Temperatur von 20° C und Normaldruck $H_2O_2$-Gehalte von bis zu etwa 2000 ppm $H_2O_2$ ($\cong$ 2790 mg $H_2O_2/m^3$) erreicht. Bei höheren Temperaturen steigt die Aufnahmefähigkeit des Modellgases für $H_2O_2$ entsprechend seiner Dampfdruckkurve an.

Das Gas verläßt den auf 70° C beheizten Fallfilmverdampfer und gelangt in den Reaktor. Dort befindet sich der Katalysator, vorzugsweise in Form eines Wirbelbettes aus einem feinteiligen, im Reaktionsmedium inerten Feststoff, welcher aufgrund einer im Vergleich zur Reaktorwand größeren geometrischen und/oder inneren Oberfläche bzw. Adsorptionswirkung die Umsetzung fördert und $H_2O_2$ nicht oder nicht wesentlich zersetzt. Es werden Mengen des Katalysators eingesetzt, welche Raumgeschwindigkeiten zwischen 18 und 260 $m^3$/h/kg gestatten.

In dem Reaktor werden die Stickoxide mit dem Wasserstoffperoxid katalytisch zu $HNO_3$ umgesetzt, wobei diese Verbindung gasförmig anfällt und vom Modellgasstrom, zusammen mit dem aus der Umsetzung von NO stammenden Wasserdampf aufgenommen und aus dem Reaktor ausgetragen wird.

Das Gas gelangt dann, wenn man es nicht als solches, z. B. zur Herstellung von Düngemitteln, weiterverwenden will, im einfachsten Fall unmittelbar zur Erzeugung von Salpetersäure in ein Waschsystem. In diesem wird der $HNO_3$-Gehalt mit Hilfe von Wasser oder verdünnter Salpetersäure einer Konzentration über 10 Gew.-% ausgewaschen. Dies gelingt sehr leicht, weil gasförmiges $HNO_3$ in wäßrigen Medien leicht löslich ist. Etwa nicht umgesetzte Reste an Stickoxiden lösen sich nur sehr wenig in der Waschstufe und verlassen daher die Anlage zu gegebenenfalls weiterer Aufarbeitung. Das Abgas kann auch noch $HNO_3$-Anteile in einer Konzentration enthalten, die näherungsweise über das Flüssigkeit/Gas-Phasengleichgewicht der Waschflüssigkeit angegeben werden kann.

Die im Laborexperiment erreichten Entstickungsgrade liegen bei Anwendung eines Kieselgels als Katalysator bei über 90 %, wenn das Rohgas 720 ppm $NO_x$ enthält und eine Konzentration von 1200 ppm $H_2O_2$ eingestellt wird.

Der vorstehend in allgemeiner Form dargestellte Verfahrensgang einfacher Ausführungsform kann als eine erste Stufe in einem praxisgemäßen Verfahren eingerichtet werden. Diese Stufe bestünde dann aus a) Peroxidzugabe und -verdampfung, b) Umsetzung des Peroxids mit den Stickoxiden in dem Katalysatorwirbelbett und c) einer Absorption des gebildeten gasförmigen $HNO_3$ in mindestens 10 Gew.-%iger Salpetersäure. Mit mehreren Stufen aus a) plus b) und einer Nachwäsche im Anschluß an c) können höchste Entstickungsgrade erreicht werden. Sie können fast 100 % erreichen.

Der Einfluß der $NO_x$-Beladung des zu behandelnden Gases ist wie folgt:

Bedingungen:

| | |
|---|---|
| Modellgas, | Wirbelbettreaktor |
| Temperatur: | 25° C |
| Gasstrom: | 2,3 Nm³/h |
| Katalysator: | 30 g Kieselgel 60 |
| $H_2O_2$-50 %ige-Lösung: | 0,08 ml/min |

| | | | | | | |
|---|---|---|---|---|---|---|
| Eingang, ppm | NO | 1625 | 875 | 470 | 250 | 20 |
| | $NO_x$ | 2250 | 1250 | 690 | 400 | 90 |
| | $NO_2$ | 625 | 375 | 220 | 150 | 70 |
| Ausgang, ppm | NO | 650 | 200 | 20 | 0 | 0 |
| | $NO_x$ | 1500 | 875 | 70 | 35 | 25 |
| | $NO_2$ | 850 | 675 | 50 | 35 | 25 |
| Entstickungsgrad % | | 33,3 | 30,0 | 89,9 | 91,3 | 72,2 |

Die entfernte $NO_x$-Menge verringert sich mit abnehmender $NO_x$-Konzentration im Modellgas. Bei dem sehr niedrigen $NO_x$-Gehalt von 90 ppm wird noch ein Entstickungsgrad von 72,2 % erreicht, jedoch wird das angebotene $H_2O_2$ nicht mehr vollständig ausgenutzt. Bei höheren $NO_x$-Konzentrationen (2250 ppm und 1250 ppm) liegt $H_2O_2$ im Unterschuß vor. Die Entstickung wurde hier durch Zugabe von mehr $H_2O_2$ verbessert, wobei jedoch der Taupunkt eine obere Grenze vorgibt.

Der Einfluß des $H_2O_2$-Angebotes ist wie folgt:

Bedingungen:

Modellgas,      Wirbelbettreaktor
250 ppm No
400 ppm $NO_x$    (150 ppm $NO_2$)
Katalysator:     30 g Kieselgel 60
Temperatur:     25° C
Gasstrom:      2,3 Nm³/h

| 50 % $H_2O_2$-Lösung, ml/min | | 0,08 | 0,06 | 0,04 | 0,035 | 0,03 | 0,025 | 0,02 |
|---|---|---|---|---|---|---|---|---|
| Reingas, ppm | NO | 0 | 2 | 6 | 9 | ~ 0 | ~ 0 | ~ 0 |
| | $NO_x$ | 35 | 35 | 35 | 38 | 160 | 260 | 350 |
| | $NO_2$ | 35 | 33 | 29 | 29 | 160 | 260 | 350 |
| Entstickungs-grad, % | | 91,3 | 91,3 | 91,3 | 90,5 | 60,0 | 35,0 | 12,5 |

Anhand der Daten wird deutlich, daß eine Vermehrung des $H_2O_2$-Angebotes nur dann sinnvoll ist, wenn nicht schon eine gewisse, weitgehend von apparativen Gegebenheiten beeinflußte untere Grenzkonzentration (im aktuellen Fall ca. 35 ppm $NO_x$) von $NO_x$ im Reingas erreicht wurde.

Der Einfluß der Temperatur ist wie folgt:

Bedingungen:        Modellgas, angefeuchtet mit Wasser, Wirbelbettreaktor
                 470 ppm NO
                 720 ppm $NO_x$ (250 ppm $NO_2$)
Katalysator:     30 g Kieselgel 60
Gasstrom:      2,3 Nm³/h
$H_2O_2$-50 %-Lösung: 0,08 ml/min

| Reaktortemperatur, °C | 25 | 40 | 55 | 80 | 95 | 110 | 130 |
|---|---|---|---|---|---|---|---|
| NO, ppm | 11 | 6 | 15 | 40 | 50 | 70 | 100 |
| $NO_x$, ppm | 62 | 66 | 76 | 100 | 130 | 180 | 240 |
| $NO_2$, ppm | 51 | 60 | 61 | 60 | 70 | 110 | 114 |
| Entstickungsgrad, % | 91,4 | 90,8 | 89,4 | 86,1 | 81,9 | 75 | 66,7 |

Bei Steigerung der Temperatur verschlechtert sich der Entstickungsgrad zunächst leicht, dann zunehmend stärker. Dieser Tendenz könnte durch eine größere Katalysatormenge entgegengewirkt werden.

Der Einfluß der Katalysatormenge im Wirbelbett ist wie folgt:

Bedingungen:        Modellgas, Wirbelbett
                 480 ppm NO
                 700 ppm $NO_x$ (250 ppm $NO_2$)
Katalysator:     Kieselgel 60
Temperatur:     40° C
Gasstrom:      1,6 Nm³/h

H$_2$O$_2$-50 %-Lösung: 0,08 ml/min

| Katalysatormenge, g | | 15 | 30 | 60 |
|---|---|---|---|---|
| Reingas, ppm | NO | 30 | 20 | 0 |
| | NO$_x$ | 110 | 70 | 30 |
| | NO$_2$ | 80 | 50 | 30 |
| Entstickungsgrad, % | | 84,3 | 90,0 | 95,7 |

Die Erhöhung der Katalysatormenge bei gegebenem Volumenstrom des zu behandelnden Gases (i.e. Verringerung der Raumgeschwindigkeit) bewirkt einen erhöhten Umsatz der Stickoxide zu HNO$_3$.

Weitere denkbare Einflußgrößen auf den Umsatz, wie die Feuchtigkeit des Rohgases (evtl. konkurrierende Adsorption von H$_2$O$_2$/NO/NO$_2$ mit H$_2$O) oder die zusätzliche Anwesenheit von SO$_2$, sowie beide Einflußgrößen gemeinsam sind experimentell überprüft worden.

Nach der Befeuchtung des Modellgases trat ein etwas verringerter Entstickungseffekt auf, jedoch liegen weiterhin hohe Entstickungsgrade vor (s. Beispiele).

Bei angefeuchtetem und zusätzlich noch SO$_2$ enthaltenden Modellgas trat kein schlechterer Entstickungseffekt als bei trockenem und SO$_2$-freiem Modellgas auf (s. Beispiele). Das SO$_2$ wurde jedoch vollständig zu SO$_3$ umgesetzt. Demzufolge bildeten sich über dem Katalysator (Kieselgel 60) SO$_3$-Aerosole. Die Farbe des Katalysators wechselte beim Betrieb nach Beginn der H$_2$O$_2$-Zugabe von weiß nach orange, wohingegen bei trockenem und SO$_2$-freiem Modellgas ein Farbwechsel von weiß nach gelb stattfand.

Das Verfahren liefert folgende Vorteile:

1. Es ist bei Temperaturen unter 100° C bereits einsetzbar, kann also als nachgeschaltete Entstickungsstufe hinter einem Naßverfahren zur Rauchgasentschwefelung und zur Reinigung kalter Prozeßgase betrieben werden;

Das Verfahren erzeugt mit gasförmigem HNO$_3$ oder mit flüssiger Salpetersäure einen verwertbaren Stoff aus den Stickoxiden;

2. Die Abmessungen des HNO$_3$-Absorbers können relativ klein gehalten werden, da erfindungsgemäß die Stickoxide, ohne sie vorher in eine flüssige Phase einzubringen, katalytisch zu der in wäßrigen Medien leicht löslichen Verbindung HNO$_3$ umgesetzt werden.

3. Das Verfahren ist infolge der Verwendung des besonders umweltverträglichen Wasserstoffperoxids frei von zusätzlichen Schadstoffemissionen, welche z. B. bei den SCR- oder SNCR-Verfahren durch Betriebsmittel verursacht werden.

4. Das Verfahren zeichnet sich durch die Verwendung besonders preisgünstiger Katalysatoren aus, die zudem unempfindlich gegen sog. Katalysatorgifte sind, da ihre Wirksamkeit über ihre große Oberfläche und nicht durch relativ wenige aktive Zentren gewährleistet ist.

5. Das Verfahren ist wegen der geringen Investitionskosten und seines einfachen Aufbaus auch für kleinste Emissionsquellen geeignet.

6. Das Verfahren erreicht auch bei kleinen NO$_x$-Konzentrationen Entstickungsgrade von über 90 % bei einstufigem Betrieb. Mit mehreren Stufen läßt sich eine nahezu vollständige NO$_x$-Entfernung realisieren.

7. Der gewünschte Entstickungsgrad läßt sich leicht über die zugegebene Wasserstoffperoxidmenge einstellen.

8. Das Verfahren arbeitet vollkommen abwasser- und abfallfrei. Es fallen keine deponiepflichtigen Reststoffe an.

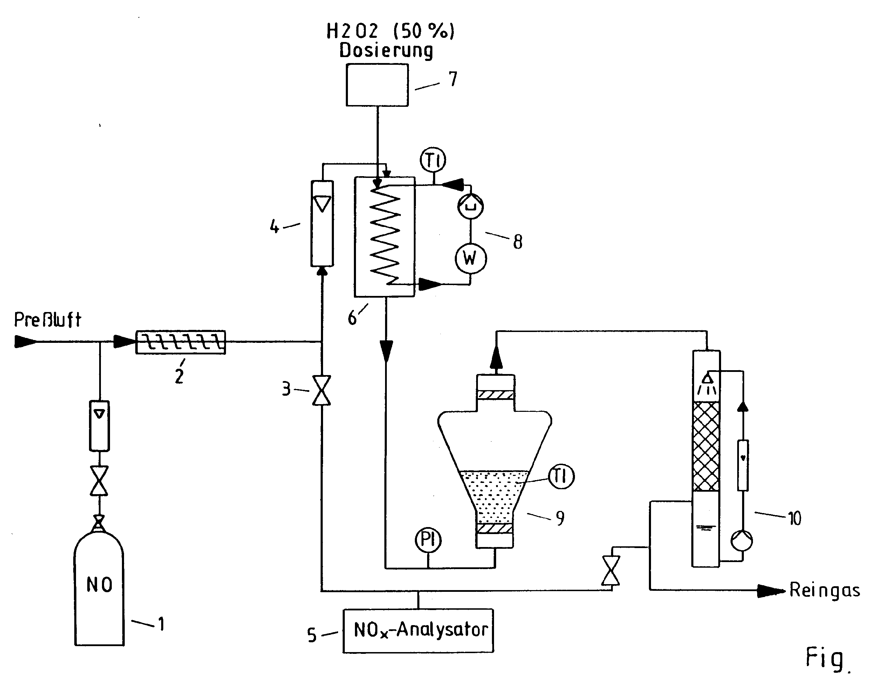

Die Erfindung wird im folgenden durch Ausführungsbeispiele mit verschiedenen Katalysatoren weiter erläutert. Beispiel 1 enthält eine Beschreibung der in allen Beispielen verwendeten Apparatur (Siehe Figur 1).

Beispiel 1

Ein Modellgas wird durch Mischen von Preßluft und einer geringen Menge NO-Gas, das einer Gasflasche 1 entnommen wird, hergestellt und durch eine Mischstrecke 2 in den Fallfilmverdampfer 6 (Material: Glas) geleitet. Der Volumenstrom beträgt 2,3 Nm$^3$/h. Er wird durch einen Schwebekörperdurchflußmesser 4 angezeigt.

Das Modellgas wird bedarfsweise nach Öffnen des Ventils 3 mit einem handelsüblichen $NO_x$-Analysegerät 5 (Chemolumineszenzprinzip) auf seinen NO- und $NO_x$-Gehalt analysiert. Die Differenz der $NO_x$- und NO-Konzentration ergibt die $NO_2$-Konzentration. Das $NO_2$ bildet sich durch Luftoxidation aus NO.

Beim Durchströmen des Fallfilmverdampfers wird das Modellgas mit einer definierten Menge verdampfter $H_2O_2$-Lösung beladen. Dazu dient ein Dosierautomat 7, mit dem 50 %ige wäßrige Wasserstoffperoxidlösung kontinuierlich auf die vom Modellgas umströmte Verdampfungsfläche des Fallfilmverdampfers gegeben wird. Die Verdampfungsfläche wird mit Warmwasser beheizt, welches mittels eines Thermostaten auf 80° C temperiert wird. Die zudosierte $H_2O_2$-Lösung läuft mit einer Dosierrate von 0,08 ml/min auf das obere Ende der Verdampfungsfläche und fließt an dieser infolge der Schwerkraft herunter. Auf dem Weg nach unten verdunstet die $H_2O_2$-Lösung vollkommen und wird vom Modellgas aufgenommen und weitergetragen.

Der so mit $H_2O_2$-Lösung beladene Gasstrom gelangt in den Wirbelschichtreaktor 9 (Material: Glas), der den Katalysator (60 g Kieselgel 60, Korngröße 0,2 - 0,5 mm, Artikel 7733 der Fa. Merck, Darmstadt) enthält. Der Reaktor ist konisch ausgebildet. Im unteren Teil mit dem kleinsten Querschnitt beträgt die Leerrohrgeschwindigkeit des Gases 0,33 m/s. Der Reaktor ist mit einem Thermometer ausgerüstet.

Im Anschluß an Reaktor 9 wird das abreagierte Gasgemisch in eine Füllkörperkolonne 10 (Material: Glas, Durchmesser 4 cm, Länge 40 cm, Packung: Raschigringe 4 x 4 mm, Gleichstrombetrieb) geleitet. Hier wird das im Reaktor gebildete $HNO_3$ bei Raumtemperatur mit rezykliertem Wasser, das sich nach und nach in verdünnte $HNO_3$ verwandelt, absorbiert. Der nicht umgesetzte Stickoxidanteil geht dort aufgrund der schlechten Löslichkeit nur zu einem vernachlässigbaren Teil in Lösung. Der umgepumpte Flüssigkeitsstrom beträgt 1,2 1/min. Ein Teilstrom des aus der Waschkolonne 10 austretenden Gases wird mit dem $NO_x$-Analysator 5 auf seinen Restgehalt an Stickoxiden analysiert.

Bedingungen:      Modellgas: 480 ppm NO und 680 ppm $NO_x$

                (200 ppm $NO_2$) bei 2,3 $Nm^3$/h

                Temperatur im Reaktor: 40° C

                Gesamtdruck: 1 bar

Die Konzentrationen im abgeleiteten Gas betragen,

- ohne Zugabe von $H_2O_2$-Lösung in 6: 430 ppm NO und 630 ppm $NO_x$ (200 ppm $NO_2$)
- bei Zugabe von 0,08 ml/min $H_2O_2$, 50 %ige Lösung in 6:

         0 ppm NO und 30 ppm $NO_x$ (30 ppm $NO_2$).

Diese Endkonzentrationen werden 10 Minuten nach Start der $H_2O_2$-Zudosierung erreicht. Das zuvor weiße Kieselgel nimmt im Verlauf dieser Zeit eine gelbliche Farbe an.

Entstickungsgrad:      95,6 %

Beispiel 2

Die Arbeitsweise entspricht Beispiel 1, jedoch mit geänderter $NO_x$-Konzentration des Modellgases (700 ppm NO und 1000 ppm $NO_x$ (300 ppm $NO_2$) und einer Dosierrate von 0,12 ml/min $H_2O_2$-Lösung) in den Fallfilmverdampfer 6, sowie der Verwendung von 50 %iger Salpetersäure als Absorptionslösung in 10.

Die Konzentrationen im abgeleiteten Gas betragen nach Zugabe von 0, 12 ml/min $H_2O_2$ (50 %ige Lösung) in 6: 0 ppm NO und 460 ppm $NO_x$ (460 ppm $NO_2$).

Der Blindversuch mit $NO_x$-freiem Modellgas und ohne $H_2O_2$-Zugabe führte bei dem abgeleiteten Gas infolge des Dampfdruckes der 50 %igen Salpetersäure zu einem Signal von 0 ppm NO und 380 ppm $NO_x$ (380 ppm $NO_2$).

Entstickungsgrad:      92 % ($HNO_3$-Dampfdruck berücksichtigt)

Beispiel 3

Wie in Beispiel 1, jedoch mit anderer $NO_x$-Konzentration des Modellgases ( 210 ppm NO und 350 ppm $NO_x$ (140 ppm $NO_2$)) einer Katalysatormenge von 30 g Kieselgel sowie einer Temperatur von 25° C und einer Dosierrate von 0,02 ml/min $H_2O_2$-Lösung.

Das abgeleitete Gas enthält

- ohne Zugabe von $H_2O_2$-Lösung in 6:

         180 ppm NO und 320 ppm $NO_x$ (140 ppm $NO_2$);

- bei Zugabe von 0,02 ml/min $H_2O_2$-50 %ige Lösung in 6:

         8 ppm NO und 28 ppm $NO_x$ (20 ppm $NO_2$).

Entstickungsgrad:      92 %

Beispiel 4

Wie Beispiel 1, jedoch enthält die Apparatur zusätzlich noch einen mit dem Fallfilmverdampfer 6 baugleichen, diesem jedoch vorgeschalteten Fallfilmverdampfer, in den zur Anfeuchtung des Modellgases 0,3 ml/min Wasser eindosiert wird. Die Temperatur im Reaktor beträgt 65°C, die $H_2O_2$-Lösung wird mit 0,12 ml/min zugegeben.

Die Konzentrationen im abgeleiteten Gas betragen
- ohne Zugabe von $H_2O_2$-Lösung in 6: 420 ppm NO und 640 ppm $NO_x$ (220 ppm $NO_2$);
- bei Zugabe von 0,12 ml/min $H_2O_2$-50 %ige Lösung in 6:
  20 pm NO und 60 ppm $NO_x$ (40 ppm $NO_2$).

Diese Endkonzentrationen werden 30 min. nach Beginn der $H_2O_2$-Dosierung erreicht. Über dem Katalysator bilden sich Kondensattropfen, die jedoch den Betrieb der Wirbelschicht nicht stören.
Entstickungsgrad:       91,2 %

Beispiel 5

Wie Beispiel 4, jedoch wird dem Modellgas entsprechend der NO-Zugabe aus der Gasflasche 1 zusätzlich noch $SO_2$-Gas zugegeben. (Modellgas: 400 ppm NO und 720 ppm $NO_x$ (320 ppm $NO_2$) sowie 130 ppm $SO_2$ bei 1,15 Nm³/h). Die Temperatur im Reaktor beträgt 40° C, der Volumenstrom des Modellgases beträgt 1,15 Nm³/h. Die $H_2O_2$-Lösung wird mit 0,08 ml/min in den Verdampfer 6 gegeben.

Das abgeleitete Gas enthält
- ohne $H_2O_2$-Zugabe in 6: 220 ppm NO und 680 ppm $NO_x$ (460 ppm $NO_2$) und 75 ppm $SO_2$;
- bei Zugabe von 0,08 ml/min $H_2O_2$-50 %ige Lösung in 6:
  2 ppm NO und 55 ppm $NO_x$ (53 ppm $NO_2$) und $\sim$ 0 ppm $SO_2$.

Diese Endkonzentrationen werden bezüglich $SO_2$ nach wenigen Minuten, bezüglich NO und $NO_2$ nach einer Stunde erreicht. Das Kieselgel wechselt seine Farbe von Weiß nach Orange.
Entstickungsgrad:       92,4 %

Beispiel 6

Wie Beispiel 1, jedoch wird das Gas (Modellgas: Angefeuchtet, 480 ppm NO und 720 ppm $NO_x$ (240 ppm $NO_2$)) wie in Beispiel 4 mit Wasser angefeuchtet und es werden 30 g Katalysator (Kieselgel 60) eingesetzt. Der Reaktor wird bei verschiedenen Temperaturen (25° C, 80° C, 110° C und 130° C), die mit elektrischen Heizbändern eingestellt werden, betrieben.

Das abgeleitete Gas enthält
- ohne Zugabe von $H_2O_2$-Lösung in 6:
      410 ppm NO und 600 ppm $NO_x$ (190 ppm $NO_2$);
- bei Zugabe von 0,08 ml/min $H_2O_2$-50 -%ige Lösung in 6:
      11 ppm NO und 62 ppm $NO_x$ (51 ppm $NO_2$) bei 25° C Reaktortemperatur, bzw.
      40 ppm NO und 100 ppm $NO_x$ (60 ppm $NO_2$) bei 80° C, bzw.
      70 ppm NO und 180 ppm $NO_x$ (110 ppm $NO_2$) bei 110° C, bzw.
      100 ppm NO und 240 ppm $NO_x$ (140 ppm $NO_2$) bei 130° C.

Diese Endkonzentrationen werden im Durchschnitt 40 min, nach dem Beginn der $H_2O_2$-Dosierung erreicht.
Entstickungsgrad:       91,4 % bei 25° C
                        86,1 % bei 80° C
                        75,0 % bei 110° C
                        66,7 % bei 130° C

Beispiel 7

a) Wie Beispiel 1, jedoch schließt sich an die beschriebene Anlage nacheinander ein weiterer, mit 6 baugleicher Fallfilmverdampfer mit Dosierautomat, ein weiterer, mit 9 baugleicher Wirbelschichtreaktor, der ebenfalls 60 g Kieselgel 60 enthält und eine weitere, mit 10 baugleiche Füllkörperkolonne an, die im Gegenstrom betrieben wird.

Diese apparativen Zusätze dienen einer zweiten Behandlungsstufe. Die Füllkörperkolonne 10 der ersten Behandlungsstufe dient hier zur Zwischenabsorption von $HNO_3$ aus der Gasphase. Sowohl nach der Füllkörperkolonne 10 als auch von dem aus der gesamten Anlage abgeleiteten Gas wird wieder der NO- und $NO_x$-Gehalt bestimmt.

Bedingungen, abweichend von Beispiel 1:

Katalysator 2 x 60 g Kieselgel 60

Modellgasstrom: 480 ppm NO und 750 ppm $NO_x$

(270 ppm $NO_2$) bei 1,5 $Nm^3$/h

Das abgeleitete Gas hat

- ohne Zugabe von $H_2O_2$ in einen der beiden Verdampfer einen Gehalt von 420 ppm NO und 710 ppm $NO_x$ (290 ppm $NO_2$);
- bei Zugabe von 0,08 ml/min $H_2O_2$-50 %ige-Lösung in den Verdampfer 6 (1. Stufe) einen Gehalt von 12 ppm NO und 68 ppm $NO_x$ (56 ppm $NO_2$);
- bei der zusätzlichen Zugabe von 0,02 ml/min $H_2O_2$-50 %ige-Lösung in den an die 1. Behandlungsstufe anschließenden Verdampfer der 2. Stufe
  $\sim$ 1 ppm NO und 18 ppm $NO_x$ (17 ppm $NO_2$)

Entstickungsgrad:     90,0 % (Stufe 1)

                      73,5 % (Stufe 2)

                      97,6 % (gesamt)

b) Wie Beispiel 7a, jedoch ist die Apparatur zusätzlich mit einer mit Wasser von 25° C betriebenen Füllkörperkolonne versehen. Diese befindet sich direkt vor dem Verdampfer 6 und dient zur Befeuchtung des Modellgases. Weiterhin findet keine Zwischenabsorption von $HNO_3$ nach der 1. Stufe statt. Der Gasstrom wird vielmehr aus dem 1. Reaktor direkt in den Fallfilmverdampfer der 2. Stufe geleitet, in den jedoch keine $H_2O_2$-Lösung eindosiert wird.

Das abgeleitete Gas enthält bei Zugabe von 0,1 ml/min $H_2O_2$-50 %ige-Lösung:

$\sim$ 0 ppm NO und 15 ppm $NO_x$ (15 ppm $NO_2$)

Entstickungsgrad:     98 % (gesamt)

## Beispiel 8

Wie Beispiel 1, jedoch mit einem anderen Katalysator und auf 0,54 $Nm^3$/h verringertem Gasstrom. Anstelle von Preßluft wird Raumluft mit der zum $NO_x$-Analysator gehörigen Gaspumpe durch die Apparatur gesaugt.

Bedingungen, abweichend von Beispiel 1:

Katalysator:     10 g Kieselgel 60 H silanisiert (Art. 7761 der Fa. Merck, Darmstadt)

Modellgas:     300 ppm NO und 520 ppm $NO_x$ (220 ppm $NO_2$) bei 0,54 $Nm^3$/h Außenluft als Trägergas

Die Konzentrationen im abgeleiteten Gas sind:

- ohne Zugabe von $H_2O_2$-Lösung in 6: 270 ppm NO und 490 ppm $NO_x$ (220 ppm $NO_2$);
- bei Zugabe von 0,024 ml/min $H_2O_2$-50 %ige-Lösung in 6:
  $\sim$ 0 ppm NO und 30 ppm $NO_x$ (30 ppm $NO_2$);

Entstickungsgrad:     94,2 %

## Beispiel 9

Wie Beispiel 1, jedoch mit einem anderen Katalysator und bei einer Temperatur von 65° C im Reaktor.

Weitere Bedingungen, abweichend von Beispiel 1:

Katalysator:     10 g H-Mordenit (Porenweite 6,7 x 7,0 Å Modul 18 (Si/Al = 9) in granulierter Form, Korngröße 0,3 - 0,9 mm

Modellgas:     550 ppm NO und 790 ppm $NO_x$ (240 ppm $NO_2$) bei 2,3 $Nm^3$/h

Das abgeleitete Gas enthält

- ohne Zugabe von $H_2O_2$-Lösung in 6: 440 ppm NO und 720 ppm $NO_x$ (280 ppm $NO_2$);
- bei Zugabe von 0,08 ml/min $H_2O_2$-50 %ige Lösung in 6:
  40 ppm NO und 210 ppm $NO_x$ (170 ppm $NO_2$);

Entstickungsgrad:     73,4 %

## Beispiel 10

a) Wie Beispiel 1, jedoch mit verringertem Modellgasstrom und anderem Katalysator.

Bedingungen, abweichend von Beispiel 1:

Katalysator:     Zeolith ZSM-5, (Porenweite 5,4 - 5,6 Å, Modul 42 (Si/Al = 21) in granulierter Form, Korngröße 0,3 - 0,9 mm)

Modellgas:     490 ppm NO und 700 ppm $NO_x$ 210 ppm $NO_2$) bei 1,58 $Nm^3$/h

Das abgeleitete Gas enthält

- ohne Zugabe von $H_2O_2$-Lösung in 6: 370 ppm NO und 590 ppm $NO_x$ (220 ppm $NO_2$);
- bei Zugabe von 0,08 ml/min $H_2O_2$-50 %ige-Lösung in 6:
  ~ 0 ppm NO und 120 ppm $NO_x$ (120 ppm $NO_2$);

Entstickungsgrad: 82,9 %

b) Wie Beispiel 10a, jedoch mit einem anderen Katalysator.

Bedingungen, abweichend von Beispiel 10a:

Katalysator: 20 g Inonenaustauscherharz, makroporös, stark sauer (Amberlyst 15, Art. 15 635 der Fa. Merck, Darmstadt), Körnung 0,3 - 0,9 mm

Das abgeleitete Gas enthält
- ohne Zugabe von $H_2O_2$-Lösung in 6:
  390 ppm NO und 540 ppm $NO_x$ (150 ppm $NO_2$);
- bei Zugabe von 0,08 ml/min $H_2O_2$-50 %ige-Lösung in 6:
  40 ppm NO und 150 ppm $NO_x$ (110 ppm $NO_2$);

Entstickungsgrad: 76,6 %

Beispiel 11

a) Wie Beispiel 8, jedoch mit anderem Katalysator.

Bedingungen, abweichend von Beispiel 8:

Katalysator: 10 g Talkumpulver, Handelsprodukt

Modellgas: 350 ppm NO und 580 ppm $NO_x$ (230 ppm $NO_2$)

Das abgeleitete Gas enthält
- ohne Zugabe von $H_2O_2$-Lösung in 6:
  310 ppm NO und 530 ppm $NO_x$ (230 ppm $NO_2$);
- bei Zugabe von 0,024 ml/min $H_2O_2$-50 %ige-Lösung in 6:
  20 ppm NO und 210 ppm $NO_x$ (190 ppm $NO_2$);

Entstickungsgrad: 63,8 %

b) Wie Beispiel 11a, jedoch mit anderem Katalysator.

Bedingungen, abweichend von Beispiel 11a:

Katalysator: 10 g Kieselgur, Handelsprodukt (Art. 8117 der Fa. Merck, Darmstadt)

Das abgeleitete Gas enthält
- ohne Zugabe von $H_2O_2$-Lösung in 6:
  290 ppm NO und 530 ppm $NO_x$ (140 ppm $NO_2$);
- bei Zugabe von 0,024 ml/min $H_2O_2$-50 %ige-Lösung in 6:
  10 ppm NO und 200 ppm $NO_x$ (190 ppm $NO_2$);

Entstickungsgrad: 65,5 %

c) Wie Beispiel 11a, jedoch mit einem anderen Katalysator.

Bedingungen, abweichend von 11a:

Katalysator: 30 g Aluminiumoxidpulver (Aluminiumoxid 90, Art. 1078 der Fa. Merck, Darmstadt)

Das abgeleitete Gas enthält bei der Zugabe von 0,024 ml/min $H_2O_2$-50 %ige-Lösung in 6:
~ 0 ppm NO und 43 ppm $NO_x$ (43 ppm $NO_2$);

Entstickungsgrad: 92,6 %

d) Wie Beispiel 11a, jedoch mit einem anderen Katalysator.

Bedingungen, abweichend von 11a:

Katalysator: 30 g Titandioxidpulver (Art. 812 der Fa. Merck, Darmstadt)

Das abgeleitete Gas enthält bei der Zugabe von 0,024 ml/min $H_2O_2$-50 %ige-Lösung in 6:
~ 0 ppm NO und 55 ppm $NO_x$ (55 ppm $NO_2$);

Der Katalysator nimmt eine gelbliche Farbe an.

Entstickungsgrad: 90,5 %

Beispiel 12

Wie Beispiel 1, jedoch mit anderem Katalysator und verringertem Modellgasstrom.

Bedingungen, abweichend von Beispiel 1:

Katalysator: 55 g schichtsilikathaltiges Material (Catsan-Hygienestreu, Fa. Effem,Verden) granuliert, Korngröße < 1 mm

Modellgas: 500 ppm NO und 700 ppm $NO_x$ (200 ppm $NO_2$) bei 1,58 Nm³/h

Das abgeleitete Gas enthält

- ohne Zugabe von $H_2O_2$-Lösung in 6:
  490 ppm NO und 550 ppm $NO_x$ (60 ppm $NO_2$);
- bei Zugabe von 0,08 ml/min $H_2O_2$-50 %ige-Lösung in 6:
  2 ppm NO und 45 ppm $NO_x$ (43 ppm $NO_2$);

Die Endwerte mit $H_2O_2$-Zugabe werden nach 60 Minuten erreicht.
Entstickungsgrad:     93,6 %

Beispiel 13

Wie Beispiel 1, jedoch wird anstelle des Wirbelbettreaktors 9 ein Rohrreaktor (Material: Glas, Durchmesser 3 cm) mit Katalysatorfestbett verwendet. Im Reaktor herrscht eine Temperatur von 65° C, der Modellgasstrom beträgt 2,0 Nm³/h.

Weitere Bedingungen, abweichend von Beispiel 1:

Katalysator:     7,5 g Aktivkohle, Strangpreßlinge 2,4 x 4 mm (spez. Oberfläche 1270 m²/g) (Aktivkohleträger 120, Fa. Degussa, Frankfurt)
Modellgasstrom:     480 ppm NO und 720 ppm $NO_x$ (240 ppm $NO_2$) bei 2,0 Nm³/h.

Das abgeleitete Gas enthält
- ohne Zugabe von $H_2O_2$-Lösung in 6:
  440 ppm NO und 640 ppm $NO_x$ (200 ppm $NO_2$);
- mit Zugabe von 0,08 ml/min $H_2O_2$-50 %ige-Lösung in 6:
  40 ppm NO und 410 ppm $NO_x$ (370 ppm $NO_2$);

Entstickungsgrad:     43,1 %

Beispiel 14

a) Wie Beispiel 13, jedoch mit anderem Katalysator.
Bedingungen, abweichend von Beispiel 13:

Katalysator:     30 g Zeolith H-Mordenit, Strangpreßlinge 4 x 7 mm, (Porenweite 6,7 x 7,0 Å, Modul 18 (Si/Al = 9)
Temperatur:     65° C
Modellgasstrom:     510 ppm NO und 750 ppm $NO_x$ (240 ppm $NO_2$) bei 2,0 Nm³/h.

Das abgeleitete Gas enthält
- ohne Zugabe von $H_2O_2$-Lösung in 6:
  410 ppm NO und 650 pm $NO_x$ (240 ppm $NO_2$);
- mit Zugabe von 0,08 ml/min $H_2O_2$-50 %ige-Lösung in 6:
  20 ppm NO und 200 ppm $NO_x$ (180 ppm $NO_2$);

Entstickungsgrad:     73,3 %

b) Wie Beispiel 13, jedoch mit erhöhter Temperatur. Bedingungen, abweichend von 13:

Temperatur:     100° C

Das abgeleitete Gas enthält bei Zugabe von 0,08 ml/min $H_2O_2$-50 %ige-Lösung in 6:
∼ 0 ppm NO und 210 ppm $NO_x$ (210 ppm $NO_2$);

Entstickungsgrad:     72 %

## Patentansprüche

1.    Verfahren zur Entfernung von Stickoxiden, insbesondere von NO und/oder $NO_2$ aus Abgasen, insbesondere solchen aus Industrie- und Feuerungsanlagen, unter Gewinnung von Salpetersäure,

    **dadurch gekennzeichnet,**

    daß man den Gehalt des Abgases an den Stickoxiden ermittelt, das Abgas mit einer in den gasförmigen Zustand übergeführten Wasserstoffperoxidlösung in einer auf die zu entfernende Stoffmenge der Stickoxide bemessenen, stöchiometrisch den Reaktionsgleichungen

$$2\,NO + 3\,H_2O_2 \rightarrow 2\,HNO_3 + 2\,H_2O$$

    bzw.

$$2\,NO_2 + H_2O_2 \rightarrow 2\,HNO_3$$

    genügenden Menge, gegebenenfalls mit einem Überschuß, belädt, das Gasgemisch entweder bei seiner Temperatur oder vorzugsweise unter Einstellung einer Temperatur von 20 - 120° C, an einem aufgrund erhöhter äußerer Oberfläche und/oder aufgrund vorhandener innerer Oberfläche zumindest gegenüber

$H_2O_2$ adsorptionsfähigen, dieses aber nicht oder nicht übermäßig zersetzenden Feststoff als Katalysator umsetzt, das umgesetzte Gasgemisch zur Weiterverarbeitung ableitet oder den in ihm enthaltenen Anteil an gebildetem gasförmigen $HNO_3/H_2O$-Gemisch nach an sich bekannten Maßnahmen zu Salpetersäure weiterverarbeitet.

2. Verfahren nach Anspruch 1,
**dadurch gekennzeichnet,**
daß man die Umsetzung in einem Wirbelbett oder Festbett des Katalysators, vorzugsweise in einem Wirbelbett, durchführt.

3. Verfahren nach Anspruch 1 oder 2,
**dadurch gekennzeichnet,**
daß als Katalysator folgende Stoffe allein oder in Mischung eingesetzt werden:
   a) Als feinteilige oder granulierte Stoffe:
   - Kieselgele, Fällungskieselsäuren, pyrogene Kieselsäuren, gegebenenfalls in hydrophobierter Form;
   - weit oder mittelporige natürliche oder synthetische Zeolithe;
   - Ionenaustauscherharze mit poröser Struktur;
   - Phyllosilikate;
   - Diatomeenerde;
   - Aluminiumoxid;
   - Titandioxid;
   - natürliche oder synthetische Schichtsilikate;
   - Aktivkohlen;
   aber auch
   b) Mikroglaskugeln;
   - Quarzsand;
   - Calciumsulfathydratpulver, gegebenenfalls als Granulat;
   - engporige Zeolithe, gegebenenfalls als Granulat;
   und sogar
   c) Bausand;
   - Eisenoxidpulver.

4. Verfahren nach den Ansprüchen 1 bis 3,
**dadurch gekennzeichnet,**
daß man wäßriges Wasserstoffperoxid in einer Konzentration bis 85 Gew.-% in der erforderlichen Mengenbemessung zur Verdunstung in einen Abgasstrom, gegebenenfalls durch Versprühen oder Zerstäuben, einbringt oder die Verdunstung mittels eines extern oder eines im Abgasstrom angeordneten Verdampfers, vorzugsweise eines Fallfilmverdampfers, unter Einstellen der Verdunstungsmengen über die Menge der dem Verdampfer zugeführten $H_2O_2$-Lösung vornimmt.

5. Verfahren nach den Ansprüchen 1 bis 4,
**dadurch gekennzeichnet,**
daß man das am Katalysator umgesetzte Gasgemisch, gegebenenfalls nach sorptiver Verminderung oder Entfernung des darin enthaltenen $HNO_3$ zu weiterer Verminderung noch enthaltener Stickoxide erneut katalytisch, gegebenenfalls nach erneuter Beladung mit $H_2O_2$ nach Anspruch 1, umsetzt und diese Maßnahme nach Bedarf ein- oder mehrmals wiederholt.

6. Verfahren nach den Ansprüchen 1 bis 5,
**dadurch gekennzeichnet,**
daß man das gebildete gasförmige $HNO_3/H_2O$-Gemisch durch Waschen mit Wasser oder vorzugsweise mit verdünnter Salpetersäure einer Konzentration über 10 Gew.-% in der Gasphase abreichert und das im Waschvorgang nicht absorbierte Restgas, gegebenenfalls zu weiterer Behandlung, ableitet.

7. Verfahren nach Anspruch 6,
**dadurch gekennzeichnet,**
daß man die Waschflüssigkeit zur Anreicherung der Salpetersäure rezykliert und aufkonzentrierte Salpetersäure bei Bedarf abzieht.

8. Verfahren nach Anspruch 6 oder 7,
   **dadurch gekennzeichnet,**
   daß man das abgeleitete Restgas vor einer Abgabe in die Atmosphäre in einer Waschstufe mit Wasser oder verdünnter Salpetersäure einer Konzentration bis 10 Gew.-% behandelt.

## Claims

1. A process for the removal of nitrogen oxides, more particularly NO and/or $NO_2$, from waste gases, more particularly from industrial plants and furnaces, with recovery of nitric acid, characterized in that the content of nitrogen oxides in the waste gas is determined, the waste gas is charged with a hydrogen peroxide solution converted into the gaseous state in a quantity which is adapted to the quantity of nitrogen oxides to be removed and which stoichiometrically satisfies the reaction equations

$$2\,NO + 3\,H_2O_2 \rightarrow 2\,HNO_3 + 2\,H_2O$$

   and

$$2\,NO_2 + H_2O_2 \rightarrow 2\,HNO_3,$$

   optionally with an excess, the gas mixture is reacted either at its temperature or preferably at a temperature of 20 to 120°C on a solid as catalyst which, by virtue of its large outer surface and/or the inner surface present, is adsorptive at least to $H_2O_2$, but does not decompose it excessively, if at all, the reacted gas mixture is removed for subsequent processing or that proportion of the gaseous $HNO_3/H_2O$ mixture formed which is present in the gas mixture is further processed to nitric acid by measures known <u>per</u> <u>se.</u>

2. A process as claimed in claim 1, characterized in that the reaction is carried out in a fluidized bed or fixed bed of the catalyst, preferably in a fluidized bed.

3. A process as claimed in claim 1 or 2 characterized in that the following substances are used individually or in admixture as the catalyst:
   a) as fine-particle or granulated substances:
      - silica gels, precipitated silicas, pyrogenic silicas, optionally in hydrophobicized form;
      - wide-pore or medium-pore, natural or synthetic zeolites;
      - porous ion exchanger resins;
      - phyllosilicates;
      - diatomaceous earth;
      - aluminium oxide;
      - titanium dioxide;
      - natural or synthetic layer silicates;
      - active carbons;
   and also
   b) glass microbeads;
      - quartz sand;
      - calcium sulfate hydrate powder, optionally in granular form;
      - narrow-pore zeolites, optionally in granular form;
   and even
   c) building sand;
      - iron oxide powder.

4. A process as claimed in claims 1 to 3, characterized in that aqueous hydrogen peroxide in a concentration of up to 85% by weight is introduced, optionally by spraying or atomization, into a waste gas stream in the necessary quantity for evaporation or evaporation is carried out in an externally arranged evaporator or in an evaporator arranged in the waste gas stream, preferably a falling-film evaporator, the quantities to be evaporated being adjusted through the quantity of $H_2O_2$ solution delivered to the evaporator.

5. A process as claimed in claims 1 to 4, characterized in that, optionally after sorptive reduction or removal of the $HNO_3$ present, the gas mixture reacted on the catalyst is again catalytically reacted, optionally after recharging with $H_2O_2$ in accordance with claim 1, for further removal of any nitrogen oxides still present, this measure being repeated one or more times as required.

6. A process as claimed in claims 1 to 5, characterized in that the gaseous $HNO_3/H_2O$ mixture formed is

depleted in the gas phase by washing with water or preferably with dilute nitric acid having a concentration above 10% by weight and the residual gas which is not absorbed in the washing phase is removed, optionally for further treatment.

7.  A process as claimed in claim 6, characterized in that the washing liquid is recycled to concentrate the nitric acid and concentrated nitric is removed as required.

8.  A process as claimed in claim 6 or 7, characterized in that, before being released into the atmosphere, the residual gas removed is treated in a washing step with water or dilute nitric acid having a concentration of up to 10% by weight.


**Revendications**

1.  Procédé pour l'élimination d'oxydes d'azote, en particulier de NO et/ou $NO_2$, à partir de gaz rejetés, notamment ceux provenant d'installations industrielles ou de chauffage, avec obtention d'acide nitrique, caractérisé en ce que l'on détermine la teneur en oxydes d'azote du gaz rejeté, on charge le gaz rejeté avec une solution de peroxyde d'hydrogène, convertie à l'état gazeux, en une quantité satisfaisant stoechiométriquement aux équations de réactions :

    $$2\,NO + 3\,H_2O_2 \rightarrow 2\,HNO_3 + 2\,H_2O$$

    ou

    $$2\,NO_2 + H_2O_2 \rightarrow 2\,HNO_3$$

    mesurée par rapport à la quantité des oxydes d'azote à éliminer, éventuellement avec un excès, on fait réagir le mélange gazeux, soit à sa température, soit, de préférence, en ajustant une température de 20-120°C, sur un solide, en tant que catalyseur, capable d'adsorption, au moins à l'égard de $H_2O_2$, en raison d'une surface externe accrue et/ou en raison de la présence d'une surface interne, mais ne décomposant pas ou ne décomposant pas de façon excessive celui-ci, on envoie pour la suite du traitement le mélange gazeux ayant réagi.ou on transforme en acide nitrique, selon des dispositions connues en soi, la fraction de mélange gazeux $HNO_3/H_2O$ formée, contenue dans celui-ci.

2.  Procédé selon la revendication 1, caractérisé en ce que l'on effectue la réaction dans un lit fixe ou lit fluidisé, de préférence dans un lit fluidisé, du catalyseur.

3.  Procédé selon la revendication 1 ou 2, caractérisé en ce que l'on utilise, en tant que catalyseur, les substances suivantes, seules ou en mélange:
    a) en tant que substances granulées ou finement divisées :
       - des gels de silice, acides siliciques précipités, acides siliciques pyrogenés, éventuellement sous forme rendue hydrophobe ;
       - des zéolites naturelles ou synthétiques à pores larges ou moyens ;
       - des résines échangeuses d'ions, à structure poreuse ;
       - des phyllosilicates ;
       - des terres à diatomées ;
       - l'oxyde d'aluminium
       - le dioxyde de titane ;
       - des silicates lamellaires naturels ou synthétiques ;
       - des charbons actifs ;
    b) des microbilles de verre ;
       - du sable siliceux ;
       - une poudre de sulfate de calcium hydraté, éventuellement sous forme de granulé ;
       - des zéolites à pores étroits, éventuellement sous forme de granulé ;
       et même
    c) du sable de construction ;
       - de la poudre d'oxyde de fer.

4.  Procédé selon l'une quelconque des revendications 1 à 3, caractérisé en ce que l'on introduit du peroxyde d'hydrogène en solution aqueuse, à une concentration allant jusqu'à 85 % en poids, dans la quantité requise pour la vaporisation dans un courant de gaz rejeté, éventuellement par pulvérisation ou atomisation, ou on effectue la vaporisation au moyen d'un évaporateur externe ou disposé dans le courant de gaz rejeté, de préférence d'un évaporateur à film descendant, en réglant la quantité vaporisée sur la quantité de la solution de $H_2O_2$ amenée à l'évaporateur.

5. Procédé selon l'une quelconque des revendications 1 à 4, caractérisé en ce que, pour une nouvelle diminution d'oxydes d'azote encore contenus, on fait à nouveau réagir catalytiquement, éventuellement après une nouvelle charge avec $H_2O_2$ selon la revendication 1, le mélange gazeux ayant réagi sur le catalyseur, éventuellement après diminution ou élimination par sorption du $HNO_3$ contenu dans celui-ci, et au besoin on répète une ou plusieurs fois cette opération.

6. Procédé selon l'une quelconque des revendications 1 à 5, caractérisé en ce que l'on concentre à une concentration de plus de 10 % en poids dans la phase gazeuse le mélange gazeux $HNO_3/H_2O$ formé, par lavage avec de l'eau ou de préférence avec de l'acide nitrique dilué, et on évacue, éventuellement vers un traitement ultérieur, le gaz résiduaire non absorbé dans le processus de lavage.

7. Procédé selon la revendication 6, caractérisé en ce que, pour l'enrichissement de l'acide nitrique, on recycle le liquide de lavage et au besoin on extrait l'acide nitrique concentré.

8. Procédé selon la revendication 6 ou 7, caractérisé en ce que le gaz résiduaire évacué est traité, avant un rejet dans l'atmosphère, dans une étape de lavage avec de l'eau ou de l'acide nitrique dilué à une concentration allant jusqu'à 10 % en poids.

Fig.